# EUROPÄISCHE PATENTSCHRIFT

(11) **EP 2 752 858 B1**
(45) Veröffentlichungstag und Bekanntmachung des Hinweises auf die Patenterteilung: **11.09.2019**
(21) Anmeldenummer: 13191513.4
(22) Anmeldetag: 05.11.2013
(51) Int. Cl.: H01F 3/08, H01F 7/08, H01F 7/11, H01F 7/16, F16K 31/06

(54) **Verfahren zur Herstellung eines Magnetsteuerventils**
Method for manufacturing a solenoid control valve
Procédé de fabrication d'une électrovanne de commande

(30) Priorität: 27.12.2012 DE 102012224385
(43) Veröffentlichungstag der Anmeldung: 09.07.2014
(73) Patentinhaber: ROBERT BOSCH GMBH, 70442 Stuttgart (DE)
(72) Erfinder: Beier, Marco, 70469 Stuttgart-Feuerbach (DE)

(56) Entgegenhaltungen:
- WO-A1-2013/178391
- DE-A1-102005 043 726
- DE-A1-102006 059 375
- GB-A- 1 055 490
- US-B2- 6 892 970

## Beschreibung

Die Erfindung betrifft ein Verfahren zur Herstellung eines Magnetventils, wie es vorzugsweise in Kraftstoffeinspritzventilen für Brennkraftmaschinen Verwendung findet, ist jedoch nicht auf diese Anwendung beschränkt.

### Stand der Technik

Zur Steuerung von Fluidströmen und insbesondere von Kraftstoffen sind Magnetventile bekannt, die eine Magnetspule und einen Magnetkern umfassen. Der Magnetkern ist dabei im Wesentlichen topfförmig ausgebildet (sogenannte Topfmagnete) und aus einem ferromagnetischen Material gefertigt, um das Magnetfeld zu verstärken und an der richtigen Stelle zu fokussieren, um den beweglichen Magnetanker möglichst effektiv und schnell zu bewegen.

Der Magnettopf kann aus verschiedenen Materialien und mit verschiedenen Fertigungstechniken hergestellt werden. Neben der Herstellung aus kompakten Materialien sind vor allem Kombinationen aus unterschiedlichen Materialien bekannt, beispielsweise aus der DE 20 2008 008 650 U1. Der Magnettopf wird hier aus einem Sintermetall gefertigt, bei dem ein Metallpulver mit einem Sinterverfahren zu einem Magnettopf verbunden wird. Mit der Sintertechnologie können komplexe Geometrien mit den Eigenschaften von massiven Materialien realisiert werden, die eine hohe Sättigungspolarisation und damit eine hohe Kraft- und Energiedichte aufweisen. Allerdings weisen die Sintermetallteile den Nachteil auf, dass sie eine hohe elektrische Leitfähigkeit aufweisen und damit das Auftreten von Wirbelströmen begünstigen, die zu hohen Wärmeverlusten führen.

Zur Unterdrückung von Wirbelströmen ist es bekannt, Magnetkerne aus gegeneinander isolierten Schichten herzustellen, um die elektrische Leitfähigkeit zwischen den einzelnen Schichten zu vermindern. Das Auftreten von Wirbelströmen wird so gemindert und damit die auftretenden Wärmeverluste minimiert. Der Aufbau des Magnetkerns aus solchen Schichten ist jedoch aufwendig und beschränkt die Möglichkeiten zur geometrischen Ausgestaltung deutlich ein.

Es ist weiter bekannt, Magnetkerne oder Magnettöpfe mit Schlitzen zu versehen, um die Bildung von Wirbelströmen zu unterdrücken. Hierbei wird die volle Wirkung der Schlitze erst erreicht, wenn der Außenpol bzw. der Innenpol des Magnetkerns komplett durchschnitten wird. Hierdurch ist jedoch die Anzahl solcher Schlitze auf jeweils einen beschränkt, da sonst der Kern in zwei oder mehr Teile geteilt wird, was die Stabilität negativ beeinflusst und die Montage des Magnetkerns erschwert. US6892970 B2 zeigt ein Magnetventil mit einem aus Segmenten ausgebildeten topfförmigen Magnetkern.

### Vorteile der Erfindung

Bei dem erfindungsgemäßen Verfahren zur Herstellung eines Magnetventils, das der Steuerung eines Fluidflusses dient und einen beweglichen Magnetanker umfasst, wird der Magnetkern aus einem Sintermetallpulver geformt, wobei schlitzförmige Ausnehmungen ausgelassen werden. Die schlitzförmigen Ausnehmungen werden anschließend durch ein Sintermaterial gefüllt, das eine elektrische Leitfähigkeit aufweist, die deutlich unter der des Sintermetalls liegt. Anschließend wird der so geformte Körper gesintert, indem der auf eine Temperatur erwärmt wird, die unterhalb der Schmelztemperatur des Sintermetalls liegt, zumindest jedoch unterhalb der Schmelztemperatur eines Bestandteils des Sintermetalls, falls dieses aus verschiedenen metallischen Komponenten besteht. Dadurch bildet sich ein kompakter und stabiler Magnetkern, der die beim Betrieb unweigerlich entstehenden Wirbelströme effektiv unterdrückt, ohne dass dies mit einer geringeren mechanischen Stabilität erkauft wird.

In einer vorteilhaften Weiterbildung des erfindungsgemäßen Verfahrens ist das Sintermaterial zur Auffülllung der schlitzförmigen Ausnehmungen ein keramisches Sinterpulver. Dieses härtet beim Erhitzen formstabil aus und geht eine feste Verbindung mit dem Sintermetall ein, so dass eine mechanisch belastbare Verbindung entsteht.

Besonders vorteilhaft ist das Verfahren, wenn das Sintermaterial, das nur eine geringe elektrische Leitfähigkeit aufweist, das gleiche Schrumpfungsverhalten aufweist wie das Sintermetall. Damit können Formabweichungen und Spannungen innerhalb des Magnetkerns vermieden werden.

Das mit dem erfindungsgemäßen Verfahren hergestellte Magnetventil weist den Vorteil auf, dass das Magnetventil gute magnetische Eigenschaften aufweist bei gleichzeitigt stark vermindertem Verlust durch Wirbelströme. Der Magnetkern des Magnetventils ist aus einem metallischen Werkstoff gefertigt und weist wenigstens eine schlitzförmige Ausnehmung auf, die mit einem Werkstoff gefüllt ist, der eine im Vergleich zur elektrischen Leitfähigkeit des metallischen Werkstoffs geringe elektrische Leitfähigkeit aufweist. Dieser Aufbau des Magnetkerns garantiert ein effektives Unterdrücken der Wirbelströme und damit von Wärmeverlusten im Magnetkern, ohne dass die mechanische Stabilität wesentlich beeinträchtigt wäre.

Der Magnetkern kann topfförmig ausgestaltet sein und einen Innenpol und einen Außenpol aufweisen, wobei die schlitzförmige Ausnehmung den Innenpol und/oder den Außenpol vollständig durchtrennt. Durch die Ausgestaltung der schlitzförmigen Ausnehmung werden die Wirbelströme effektiv unterdrückt. Der Magnetkern ist dabei in vorteilhafter Weise topfförmig ausgebildet und weist eine Ringnut zur Aufnahme der Magnetspule auf, so dass der Bereich innerhalb der Magnetspule den Innenpol und der Bereich des Magnetkerns außerhalb der Magnetspule den Außenpol bildet.

In einer weiteren Ausgestaltung ist die schlitzförmige Ausnehmung so ausgebildet, dass sie den metallischen Magnetkern in zwei Teile unterteilt, die nicht direkt aneinander grenzen. Dadurch kann zwischen diesen Teilen kein oder nur ein geringer Strom fließen, was die Wirbelströme weiter unterbindet. In vorteilhafter Weise können auch mehrere solcher schlitzförmigen Ausnehmungen vorgesehen sein.

Weitere Vorteile und vorteilhafte Ausgestaltungen der Erfindung sind der Beschreibung und der Zeichnung entnehmbar.

### Zeichnung

In der Zeichnung sind verschiedene Beispiele eines Magnetventils dargestellt. Es zeigt
- Figur 1: einen Längsschnitt durch ein Magnetventil mit einem Magnetkern,
- Figur 2: eine vergrößerte Darstellung eines Magnetkerns nach dem Stand der Technik,
- Figur 3: eine Vorstufe des Magnetkerns eines Magnetventils und
- Figur 4a, 4b, 4c und 4d: weitere Ausführungsbeispiele von Magnetkernen.

### Beschreibung der Ausführungsbeispiele

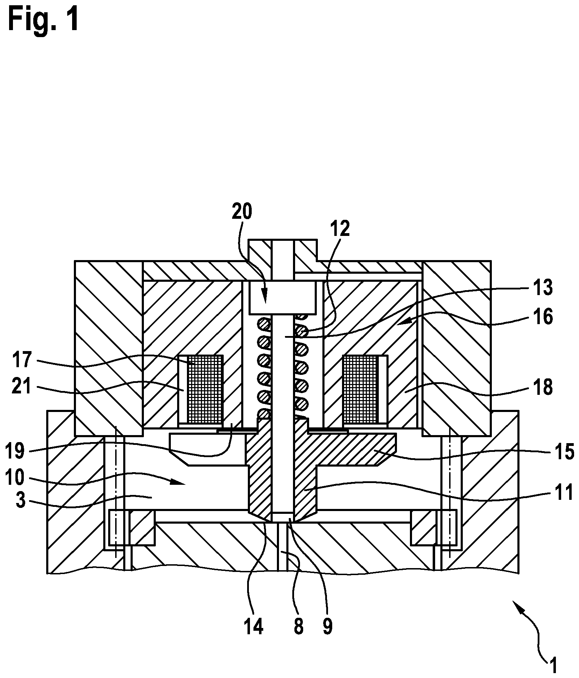

In Figur 1 ist ein Magnetventil im Längsschnitt dargestellt, wie es beispielsweise in Kraftstoffeinspritzventilen für Brennkraftmaschinen eingesetzt wird. Es dient zur Steuerung eines Fluidflusses, beispielsweise von flüssigem Kraftstoff, der von einem Bereich mit hohem Druck in einen Bereich mit niedrigerem Druck fließt. Das Magnetventil weist ein Gehäuse 1 auf, das mehrteilig aufgebaut ist und in dem ein Kanal 8 ausgebildet ist, in dem das zu steuernde Fluid unter einem Ausgangsdruck anliegt, dessen Abfluss in einem Niederdruckraum 3 durch das Magnetventil gesteuert wird. Das Magnetventil umfasst einen Magnetanker 15, der längsbeweglich im Niederdruckraum 3 angeordnet ist. Der Magnetanker 15 ist auf einem Führungsstift 13 geführt und bildet dazu einen zylindrischen Führungsabschnitt 11, der den Führungsstift 13 aufnimmt. Der zylindrische Führungsabschnitt 11 und die Stirnseite des Führungsstifts 13 begrenzen einen Druckraum 9, in den der Kanal 8 mündet.

Dem Druckraum 9 abgewandt stützt sich der Führungsstift 13 über eine Stützplatte 20 am Gehäuse 1 ab, wobei zwischen der Stützplatte 20 und dem Magnetanker 15 eine Feder 13 unter Druckvorspannung angeordnet ist, die den Magnetanker 15 gegen einen im Gehäuse ausgebildeten Magnetventilsitz 14 drückt. Dadurch verschließt der Magnetanker 15 den Druckraum 9 gegenüber dem Niederdruckraum 3.

Zur Bewegung des Magnetankers 15 dient ein Elektromagnet, der einen Magnetkern 16 und eine Magnetspule 17 umfasst. Der Magnetkern 16 ist topfförmig ausgebildet und weist eine Ringnut 21 auf, die die Magnetspule 17 aufnimmt, so dass der Bereich des Magnetkerns 16, der außerhalb der Magnetspule 17 ausgebildet ist, einen Außenpol 18 bildet, während der innerhalb der Magnetspule 17 befindliche Teil des Magnetkerns 16 einen Innenpol 19 bildet. Der Magnetkern 16 dient der Verstärkung des durch die Magnetspule 17 erzeugten Magnetfeldes und der Fokussierung auf den Magnetanker 15, um eine möglichst große magnetische Kraft auf den Magnetanker 15 zu erzeugen.

Um das Magnetventil zu öffnen, wird ein Steuerstrom durch die Magnetspule 17 geleitet, so dass sich ein entsprechendes Magnetfeld um die Magnetspule 17 bildet. Das Magnetfeld magnetisiert den Magnetkern 16, der aus einem ferromagnetischen Material besteht, so dass ein starkes Magnetfeld entsteht, das auf den Magnetanker 15 gerichtet ist. Der Magnetanker 15 wird dadurch vom Magnetventilsitz 14 weggezogen entgegen der Kraft der Feder 12, so dass der Druckraum 9 mit dem Niederdruckraum 3 verbunden wird und das im Kanal 8 anstehende Fluid in den Niederdruckraum 3 abfließt. Soll das Magnetventil 15 geschlossen werden, so wird die Bestromung der Magnetspule 17 unterbrochen und die Feder 12 drückt den Magnetanker 15 zurück in seine Schließstellung in Anlage an den Magnetventilsitz 14.

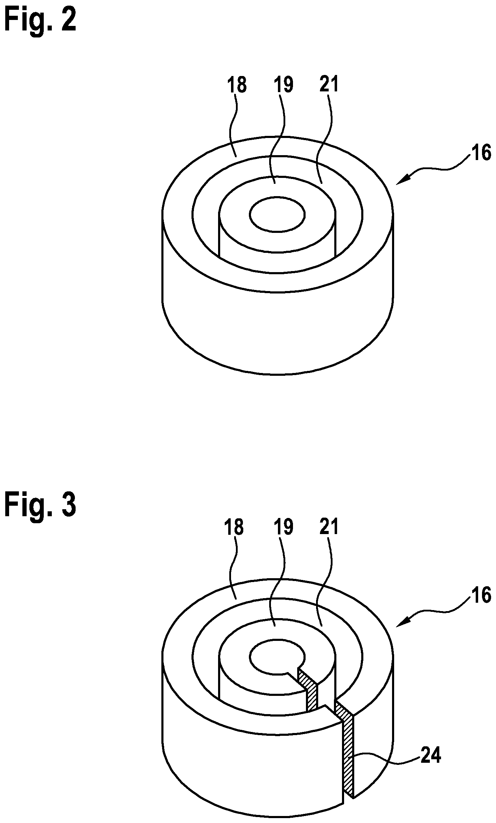

Der Magnetkern 16 hat eine Topfform und ist in Figur 2 nochmals perspektivisch dargestellt, so dass dessen rotationssymmetrische Form deutlich wird. Solche Magnetkerne sind aus dem Stand der Technik hinlänglich bekannt. Durch das Ein- und Ausschaltern des Magnetspulenstroms werden Magnetfelder erzeugt, die im Magnetkern einerseits eine entsprechend gleich gerichtete Magnetisierung induzieren, andererseits aber beim Aufbau und Abbau der Magnetfelder auch Wirbelströme im Magnetkern 16 verursachen, die ihrer Wirkung entgegen gerichtet sind. Diese Wirbelströme führen wegen des immer vorhandenen ohmschen Widerstands des Magnetkernmaterials zu einer Erwärmung und mindern die Leistungsfähigkeit des Elektromagneten, da diese Energie letztlich über den Spulenstrom dem Magnetventil zugeführt wird.

Um die Wirbelströme so weit wie möglich zu reduzieren wird der Magnetkern 16, wie er in Figur 3 dargestellt ist, mit einer schlitzartigen Ausnehmung 24 versehen, die hier sowohl den Innenpol 19 als auch den Außenpol 18 an einer Stelle vollständig durchtrennt. Ein derart ausgestalteter Magnetkern 16 hätte jedoch eine deutlich geringere Stabilität als ein aus einem Stück gefertigter Magnetkern 16. Um die gewünschte Stabilität wieder herzustellen wird die schlitzartige Ausnehmung 24 mit einem Sintermaterial aufgefüllt, das eine im Vergleich zum metallischen Magnetkern 16 deutlich geringere elektrische Leitfähigkeit aufweist und im Idealfall ein Isolator ist. Dieses Material garantiert die mechanische Festigkeit bei gleichzeitig deutlich verminderter Neigung des Magnetkerns, Wirbelströme zuzulassen.

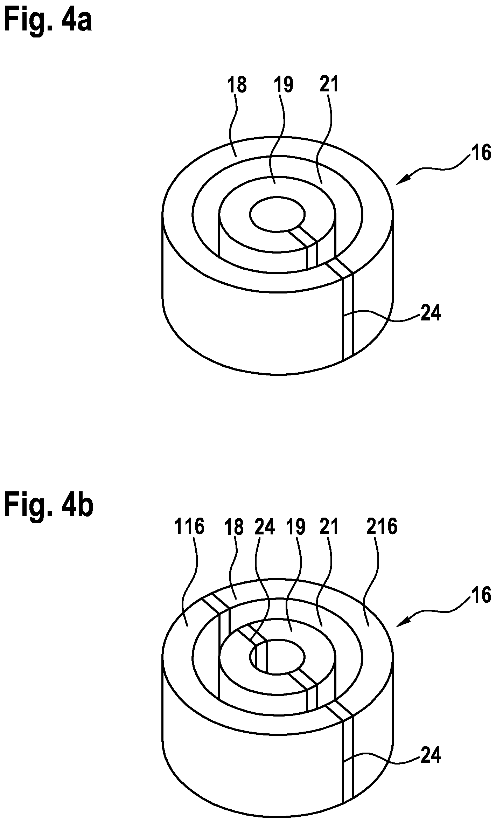

Zur Herstellung eines solchen Magnetkerns, der in Figur 4a dargestellt ist, wird der ferromagnetische Magnetkern 16 durch Sintermetallpulver gebildet, das beispielsweise durch Pressen in eine Form gebracht wird, wie in Figur 3 dargestellt. Anschließend wird die schlitzartige Ausnehmung 24 mit einem elektrisch nicht leitenden Sintermaterial aufgefüllt, beispielsweise mit einem Sinter-Keramikpulver, und soweit verpresst, dass das Sintermaterial seine Form behält. Anschließend wird der gesamte Magnetkern gesintert, das heißt er wird soweit erhitzt, bis sowohl das Sintermetall als auch das nicht-magnetische Sintermaterial in eine beständige Form übergehen. In jedem Fall darf die Sintertemperatur den Schmelzpunkt des Sintermetalls nicht überschreiten. Falls das Sintermetall aus mehreren Komponenten mit unterschiedlichem Schmelzpunkt besteht, darf die Sintertemperatur jedenfalls nicht oberhalb des Schmelzpunkts sämtlicher Komponenten liegen.

Der in Figur 4a dargestellte Magnetkern vermindert durch die darin ausgebildete schlitzförmige Ausnehmung 24 die Wirbelströme bis zu einem gewissen Grad, wobei der entscheidende Punkt hier der ist, dass sowohl der Innenpol 19 als auch der Außenpol 18 vollständig durchtrennt sind, was Ringströme durch den Innenpol bzw. Außenpol unmöglich macht. Die Unterbrechung erfolgt jedoch nur an einer Stelle, so dass in den verbleibenden metallischen Bereichen des Magnetkerns 16 weiterhin Wirbelströme induziert werden. Um die Wirbelströme weiter zu reduzieren, ist es bei dem in Figur 4b dargestellten Beispiel vorgesehen, die schlitzartige Ausnehmung so auszubilden, dass sie den metallischen Magnetkern 16 vollständig in ein erstes Teil 116 und ein zweites Teil 216 unterteilt. Da sowohl der Innenpol 19 als auch der Außenpol 18 nun an zwei Stellen unterbrochen werden, werden die Wirbelströme noch effektiver unterdrückt.

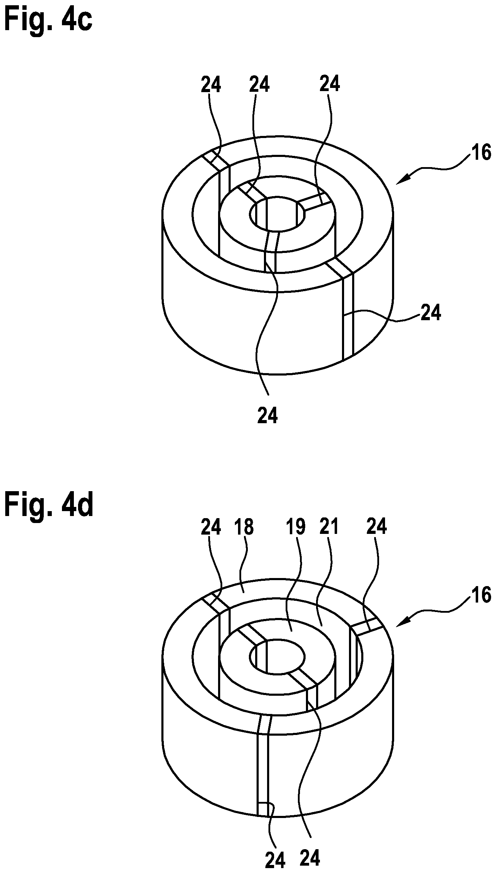

In Figur 4c ist ein weiteres Beispiel dargestellt, bei dem der Innenpol 19 des Magnetkerns 16 durch schlitzartige Ausnehmungen 24 in drei gleich große Teile unterteilt ist, während der Außenpol in zwei Teile unterteilt wird. Das in Figur 4d gezeigte Beispiel zeigt hingegen einen Magnetkern, bei dem der Innenpol 19 in zwei und der Außenpol in drei Teile durch entsprechende schlitzartige Ausnehmungen 24 unterteilt wird. Welche der gezeigten Varianten jeweils die vorteilhafteste ist, hängt von den auftretenden Magnetfeldern und von der sonstigen Geometrie des Magnetkerns 16 ab. Die Herstellung dürfte in der Regel aufwendiger werden, je mehr schlitzartige Ausnehmungen 24 im Magnetkern vorgesehen sind, jedoch erhöht auch jede Ausnehmung 24 die Unterdrückung der Wirbelströme. Um die notwendige Magnetisierung zu erhalten, darf auch der metallische Anteil des Magnetkerns nicht zu gering werden.

## Patentansprüche

1. Verfahren zur Herstellung eines Magnetventils zur Steuerung eines Fluidflusses umfassend einen Magnetkern (16) und einen beweglichen Magnetanker (15), **gekennzeichnet durch** folgende Verfahrensschritte:
- Formen des Magnetkerns (16) aus einem Sintermetallpulver unter Auslassung wenigstens einer schlitzförmigen Ausnehmung (24), wobei das Sintermetallpulver aus einem ferromagnetischen Metall besteht,
- Verfüllen der schlitzförmigen Ausnehmung (24) mit einem Sintermaterial aus einem im Vergleich zum Material des Sintermetallpulvers elektrisch schlecht leitenden Material,
- Sintern des Magnetkerns (16) durch Erwärmen auf eine Temperatur unterhalb der Schmelztemperatur zumindest eines Bestandteils des Sintermetallpulvers.

2. Verfahren nach Anspruch 1, **dadurch gekennzeichnet, dass** das Sintermetallpulver aus einer Eisen-Kobalt-Legierung (FeCo) besteht oder aus einer Mischung von Eisen- und Kobaltpartikeln.

3. Verfahren nach Anspruch 1 oder 2, das das elektrisch schlecht leitende Material ein Sinter-Keramikpulver ist.

4. Verfahren nach einem der Ansprüche 1, 2 oder 3, **dadurch gekennzeichnet, dass** das Sintermetallpulver und das elektrisch schlecht leitende Material beim Sinterprozess das gleiche Schrumpfungsverhalten aufweisen.

## Claims

1. Method for manufacturing a solenoid valve for controlling a fluid flow comprising a magnetic core (16) and a movable magnetic armature (15), **characterized by** the following method steps:
- forming the magnetic core (16) from a sintered metal powder while leaving at least one slit-shaped clearance (24), the sintered metal powder consisting of a ferromagnetic metal,
- filling the slit-shaped clearance (24) with a sintered material of an electrically poorly conducting material in comparison with the material of the sintered metal powder,
- sintering the magnetic core (16) by heating to a temperature below the melting temperature of at least one constituent of the sintered metal powder.

2. Method according to Claim 1, **characterized in that** the sintered metal powder consists of an iron-cobalt alloy (FeCo) or of a mixture of iron particles and cobalt particles.

3. Method according to Claim 1 or 2, which the electrically poorly conducting material is a sintered ceramic powder.

4. Method according to one of Claims 1, 2 or 3, **characterized in that** the sintered metal powder and the electrically poorly conducting material have the same shrinkage behaviour during the sintering process.

## Revendications

1. Procédé de fabrication d'une électrovanne pour la commande d'un écoulement fluidique, comprenant un noyau magnétique (16) et un induit magnétique mobile (15), **caractérisé par** les étapes de procédé suivantes :
- formation du noyau magnétique (16) à partir d'une poudre de métal fritté en préservant au moins un évidement en forme de fente (24), la poudre de métal fritté se composant d'un métal ferromagnétique,
- remplissage de l'évidement en forme de fente (24) avec un matériau fritté en un matériau conduisant mal l'électricité par comparaison avec le matériau de la poudre de métal fritté,
- frittage du noyau magnétique (16) par chauffage à une température en dessous de la température de fusion d'au moins un constituant de la poudre de métal fritté.

2. Procédé selon la revendication 1, **caractérisé en ce que** la poudre de métal fritté se compose d'un alliage de fer et de cobalt (FeCo) ou d'un mélange de particules de fer et de particules de cobalt.

3. Procédé selon la revendication 1 ou 2, qui le matériau conduisant mal l'électricité est une poudre de céramique frittée.

4. Procédé selon l'une quelconque des revendications 1, 2 ou 3, **caractérisé en ce que** la poudre de métal fritté et le matériau conduisant mal l'électricité présentent, au cours du processus de frittage, le même comportement de retrait.
